# EUROPÄISCHE PATENTANMELDUNG

(11) **EP 1 944 670 A1**
(43) Veröffentlichungstag der Anmeldung: **16.07.2008**
(21) Anmeldenummer: 07015630.2
(22) Anmeldetag: 08.08.2007
(51) Int. Cl.: G05B 19/408, G05B 19/4093, G05B 19/4097, B29C 70/38, B65H 81/06

(54) **Steuerverfahren für eine Produktionsmachine mit Anwenderprogramm in Werkstückkoordinaten und hiermit korrespondierende Gegenstände**

(71) Anmelder: Siemens Aktiengesellschaft, 80333 Munich (DE)
(72) Erfinder: Bauer, Peter, 91074 Herzogenaurach (DE); Geissdörfer, Klaus, Dr., 91056 Erlangen (DE); Mutscheller, Wolfgang, Dr., 70178 Stuttgart (DE)

(57) **Zusammenfassung**

Eine Steuereinrichtung (3) für eine Produktionsmaschine nimmt unter Ausführung eines Systemprogramms ein Anwenderprogramm (7) entgegen, das in Werkstückkoordinaten eines zu bearbeitenden Werkstücks (1) eine Sollverfahrbewegung eines Maschinenkopfes (4) der Produktionsmaschine relativ zum Werkstück (1) sowie eine Sollbearbeitungsinformation darüber, an welchen Stellen des Werkstücks (1) mittels des Maschinenkopfes (4) das Werkstück (1) bearbeitet werden soll, umfasst. Die Steuereinrichtung (3) ermittelt anhand der Sollverfahrbewegung für mindestens sechs Achsen (A,B,C1,C2,x,y,z) der Produktionsmaschine derart koordinierte Sollachsbewegungen, dass der Maschinenkopf (4) unter Beachtung einzuhaltender Grundbedingungen in drei translatorischen und drei rotatorischen Freiheitsgraden entsprechend der Sollverfahrbewegung relativ zum Werkstück (1) bewegt wird. Sie steuert die Achsen (A,B, C1,C2, x, y, z) entsprechend den ermittelten Sollachsbewegungen an. Weiterhin ermittelt die Steuereinrichtung (3) anhand zumindest der Sollbearbeitungsinformation Sollwechselpunkte (20), zu denen das Bearbeiten des Werkstücks (1) begonnen oder beendet werden soll. Sie steuert den Maschinenkopf (4) entsprechend der ermittelten Sollwechselpunkte (20) an, so dass der Maschinenkopf (4) das Werkstück (1) entsprechend der Sollbearbeitungsinformation bearbeitet.

## Beschreibung

Steuerverfahren für eine Produktionsmaschine mit Anwenderprogramm in Werkstückkoordinaten und hiermit korrespondierende Gegenstände

Die vorliegende Erfindung betrifft ein Steuerverfahren für eine Produktionsmaschine, wobei eine Steuereinrichtung für die Produktionsmaschine ein Systemprogramm ausführt.

Die vorliegende Erfindung betrifft weiterhin ein Systemprogramm, das Maschinencode umfasst, der durch eine Steuereinrichtung für eine Produktionsmaschine ausführbar ist.

Weiterhin betrifft die vorliegende Erfindung einen Datenträger, auf dem ein derartiges Systemprogramm gespeichert ist.

Weiterhin betrifft die vorliegende Erfindung eine Steuereinrichtung für eine Produktionsmaschine, wobei die Steuereinrichtung einen Systemspeicher aufweist, in dem ein Systemprogramm gespeichert ist, das von der Steuereinrichtung ausführbar ist.

Schließlich betrifft die vorliegende Erfindung eine Produktionsmaschine, die eine Steuereinrichtung, einen Maschinenkopf, mindestens sechs Achsen und eine Werkstückhalterung aufweist,
- wobei der Maschinenkopf mittels der Achsen relativ zur Werkstückhalterung in drei translatorischen und drei rotatorischen Freiheitsgraden verfahrbar ist,
- wobei mittels des Maschinenkopfes ein von der Werkstückhalterung gehaltenes Werkstück bearbeitbar ist,
- wobei der Maschinenkopf und die Achsen von der Steuereinrichtung steuerbar sind.

Die obenstehend beschriebenen Gegenstände sind allgemein bekannt.

Die vorliegende Erfindung wird - sowohl in Bezug auf den Stand der Technik als auch in Bezug auf die erfindungsgemäßen Ausgestaltungen - in Verbindung mit einer Ausgestaltung der Produktionsmaschine als Bandlegemaschine (englisch: fibre placement machine) und des Maschinenkopfes als Bandlegekopfes beschrieben. Die vorliegende Erfindung ist jedoch auch bei anderen Produktionsmaschinen einsetzbar. Es sei an dieser Stelle ausdrücklich angemerkt, dass im Rahmen der Erfindung unter anderem insbesondere auch Werkzeugmaschinen und Roboter als Produktionsmaschinen verstanden werden.

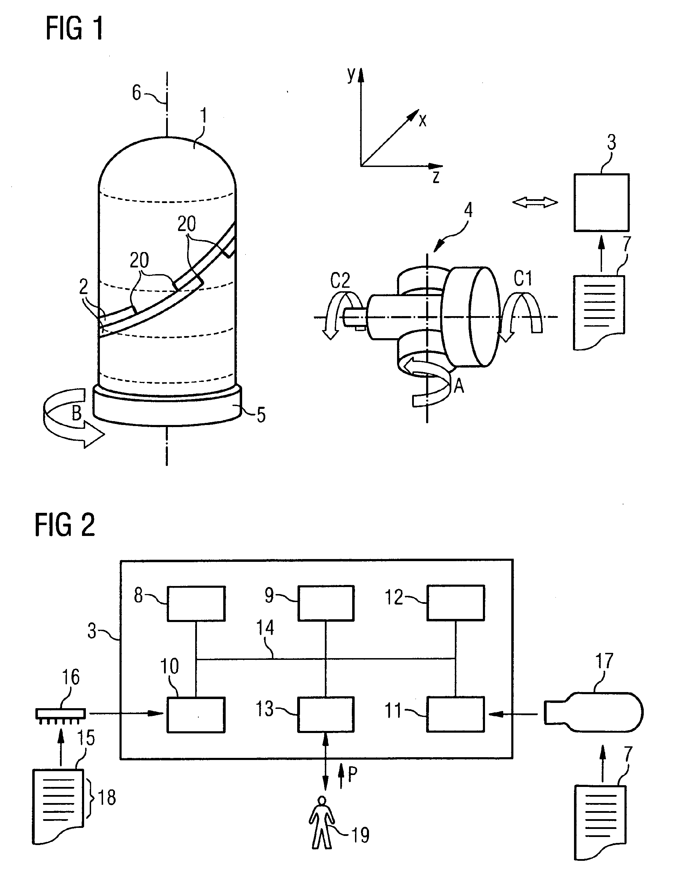

Im modernen Flugzeugbau werden in großem Stil Aluminiumteile durch Faserverbundwerkstoffe ersetzt. Dies betrifft vor allem die Rumpf- und Tragflächenstrukturen. Allgemein können derartige Teile als Werkstück 1 im Sinne der vorliegenden Erfindung angesehen werden (vergleiche FIG 1).

Das Werkstück 1 weist in etwa die Kontur der Innenseite des zu fertigenden Teils auf. Auf das jeweilige Werkstück 1 werden bei dem Verfahren des Standes der Technik simultan mehrere Bänder 2 aufgebracht. Je nach Design des zu fertigenden Teils müssen mehrere Schichten von Bändern 2 übereinander verlegt werden, wobei in jeder Schicht eine spezielle Orientierung der Bänder 2 eingehalten werden muss. Um spezielle Konturen verlegen zu können, können Sollwechselpunkte 20, zu denen mit dem Aufbringen der Bänder 2 auf das Werkstück 1 begonnen werden soll oder zu denen das Aufbringen der Bänder 2 auf das Werkstück 1 beendet werden soll (allgemein: das Bearbeiten des Werkstücks begonnen bzw. beendet werden soll), individuell festgelegt werden.

Die in FIG 1 dargestellte Bandlagemaschine weist sieben Achsen A, B, C1, C2, x, y, z auf. In der Regel ist jede der Achsen A, B, C1, C2, x, y, z lagegeregelt. In Einzelfällen kann die mit B bezeichnete Achse jedoch geschwindigkeitsgeregelt sein. Die Regelung der Achsen A, B, C1, C2, x, y, z erfolgt mittels einer Steuereinrichtung 3.

Die Achsen A, C1 und C2 sind Rundachsen. Mittels der Rundachsen A, C1 und C2 kann die Orientierung eines Bandlegekopfes 4 (allgemein: eines Maschinenkopfes 4) im Raum, also die drei rotatorischen Freiheitsgrade, festgelegt werden. In der Regel werden die Rundachsen A, C1 und C2 derart angesteuert, dass der Bandlegekopf 4 zu jedem Zeitpunkt in Richtung der Flächennormalen des momentanen Legepunktes orientiert ist und die Verlegerichtung der Bänder 2 mit einer Bahntangente korrespondiert.

Die Achse B ist ebenfalls eine Rundachse. Über die Rundachse B wird eine Werkstückhalterung, welche das Werkstück 1 trägt, um eine Halterungsachse 6 gedreht. Der Begriff "Halterungsachse" (englisch: mandrel) bezeichnet hierbei - im Gegensatz zu den Achsen A, B, C1, C2, x, y, z, bei denen es sich um steuerungstechnische Achsen handelt, eine Achse im geometrischen Sinne. Soweit nachfolgend der Begriff "Rundachsen" verwendet wird, sind hiermit jedoch nur die Achsen A, C1 und C2 gemeint, nicht auch die Achse B. Die Achse B wird nachfolgend - zur Unterscheidung von den Rundachsen A, C1 und C2 - als Hauptachse B bezeichnet. Diese Wortwahl dient jedoch lediglich der sprachlichen Unterscheidung der Hauptachse B von den Rundachsen A, C1 und C2.

Die Achsen x, y und z sind Linearachsen. Mittels der Linearachsen x, y und z kann der Bandlegekopf 4 im Raum in drei translatorischen Freiheitsgraden positioniert werden. Die Linearachsen x, y, z werden von der Steuereinrichtung 3 in der Regel derart angesteuert, dass der Bandlegekopf 4 am Werkstück 1 anliegt. Mittels der Linearachsen x, y und z können weiterhin Positionierungskorrekturen vorgenommen werden, die sich auf Grund der Ansteuerung der Rundachsen A, C1 und C2 ergeben.

Zur translatorischen und rotatorischen Positionierung des Bandlegekopfes 4 im Raum sind auch andere Ausgestaltungen möglich, z.B. mehrere Achsen, deren Bewegung mittels einer sogenannten kinematischen Transformation eineindeutig in drei translatorische und drei rotatorische Bewegungen umrechenbar ist. Ein Beispiel einer derartigen Ausgestaltung findet sich in der DE 103 38 302 B4.

Die in FIG 1 dargestellte Bandlegemaschine ist kinematisch überbestimmt, da sechs Achsen ausreichen würden. Die Ausgestaltung der Bandlegemaschine gemäß FIG 1 weist jedoch - sowohl im Stand der Technik als auch bei der vorliegenden Erfindung - erhebliche betriebstechnische Vorteile auf.

Im Stand der Technik arbeitet die Steuereinrichtung 3 ein Anwenderprogramm 7 ab. Das Anwenderprogramm 7 wird hierbei direkt in Achspositionen programmiert. Eine Steuerung des Bandlegekopfes 4 zum Beginnen und zum Beenden des Aufbringens der Bänder 2 auf das Werkstück 1 wird separat realisiert. Sie ist an den summierten Verfahrweg einer zusätzlichen Achse (im steuerungstechnischen Sinn, nachfolgend Rollerachse) gekoppelt. Diese Vorgehensweise ist für das Aufbringen der Bänder 2 auf das Werkstück 1 in verschiedener Hinsicht von Nachteil.

So geht auf Grund der Programmierung der Steuereinrichtung 3 in Achspositionen der Zusammenhang der Sollwechselpunkte 20 mit den Positionen auf dem Werkstück 1 verloren. Weiterhin wird eine separate Steuerung, die das Aufbringen der Bänder 2 auf das Werkstück 1 steuert, benötigt.

In der Praxis sind die Werkstücke 1, auf die die Bänder 2 aufgebracht werden sollen, sehr schwer. Sie wiegen oftmals mehrere Tonnen. Es ist in der Praxis nahezu unmöglich, sie exakt auf der Werkstückhalterung 5 zu positionieren. Die exakte Positionierung des Werkstücks 1 auf der Werkstückhalterung 5 muss daher durch Messung ermittelt werden. Die Ermittlung der Sollachsbewegungen erfolgt daher individuell für jedes einzelne Werkstück 1, auch wenn die Werkstücke 1 untereinander gleich sind. Weiterhin muss das Anwenderprogramm 7 sehr viele Achspositionen bestimmen, um Linearisierungsfehler zu vermeiden. Das Anwenderprogramm 7 ist daher sehr groß.

Zum Erstellen des Anwenderprogramms 7 für die Steuereinrichtung 3 und eines Programms für die Bandlegekopfsteuerung wird im Stand der Technik zunächst die Geometrie des Werkstücks 1 festgelegt. Diese Festlegung beinhaltet bereits den Aufbau der übereinander liegenden Schichten und die Orientierung der Bänder 2 jeder Schicht. Sodann werden die Bahnbewegungen für den Bandlegekopf 4 in Werkstückkoordinaten ermittelt. Weiterhin werden die Sollwechselpunkte 20 in Werkstückkoordinaten oder als Funktion des zurückgelegten Verfahrweges ermittelt. Sodann wird die Sollverfahrbewegung von Werkstückkoordinaten in Achskoordinaten umgerechnet. Auf diese Weise entsteht ein Anwenderprogramm 7, das nur noch Positionierbefehle in Achspositionen enthält. Dabei geht insbesondere der technologisch erkennbare Zusammenhang mit den Sollwechselpunkten 20 verloren.

Die Sollwechselpunkte 20 werden im Stand der Technik parallel in Positionen der zusätzlichen Rollerachse umgerechnet. Diese ist ebenfalls als lagegeregelte Achse ausgeführt, die jedoch von einer anderen Steuereinrichtung gesteuert wird.

Das Anwenderprogramm 7 wird in die Steuereinrichtung 3 geladen, das Steuerprogramm für den Bandlegekopf 4 in die Bandlegekopfsteuerung. Im Betrieb der Bandlegemaschine müssen die Steuereinrichtung 3 und die Bandlegekopfsteuerung synchronisiert und koordiniert werden.

Die Aufgabe der vorliegenden Erfindung besteht darin, ein Steuerverfahren für eine Bandlegemaschine - bzw. allgemeiner eine Produktionsmaschine - und die hiermit korrespondierenden Gegenstände zu schaffen, welche die Nachteile des Standes der Technik vermeidet.

Die Aufgabe wird durch ein Steuerverfahren mit den Merkmalen des Anspruchs 1, ein Systemprogramm mit den Merkmalen des Anspruchs 12, einen Datenträger mit den Merkmalen des Anspruchs 13, eine Steuereinrichtung mit den Merkmalen des Anspruchs 14 und eine Produktionsmaschine mit den Merkmalen des Anspruchs 15 gelöst. Vorteilhafte Ausgestaltungen sind Gegenstand der abhängigen Ansprüche 2 bis 11 sowie 16.

Erfindungsgemäß führt die Steuereinrichtung für die Produktionsmaschine ein Systemprogramm aus, wobei die Steuereinrichtung unter Ausführung des Systemprogramms
- ein Anwenderprogramm entgegen nimmt, das in Werkstückkoordinaten eines zu bearbeitenden Werkstücks eine Sollverfahrbewegung eines Maschinenkopfes der Produktionsmaschine relativ zum Werkstück sowie eine Sollbearbeitungsinformation darüber, an welchen Stellen des Werkstücks mittels des Maschinenkopfes das Werkstück bearbeitet werden soll, umfasst,
- anhand der Sollverfahrbewegung für mindestens sechs Achsen der Produktionsmaschine derart koordinierte Sollachsbewegungen ermittelt, dass der Maschinenkopf unter Beachtung einzuhaltender Grundbedingungen in drei translatorischen und drei rotatorischen Freiheitsgraden entsprechend der Sollverfahrbewegung relativ zum Werkstück bewegt wird, und die Achsen entsprechend den ermittelten Sollachsbewegungen ansteuert,
- anhand zumindest der Sollbearbeitungsinformation Sollwechselpunkte ermittelt, zu denen das Bearbeiten des Werkstücks begonnen oder beendet werden soll, und den Maschinenkopf entsprechend der ermittelten Sollwechselpunkte ansteuert, so dass der Maschinenkopf das Werkstück entsprechend der Sollbearbeitungsinformation bearbeitet.

Es ist möglich, dass die Steuereinrichtung die Sollachsbewegungen und die Sollwechselpunkte zunächst vollständig ermittelt und erst dann die Achsen und den Maschinenkopf ansteuert. Vorzugsweise jedoch ermittelt die Steuereinrichtung die Sollachsbewegungen und die Sollwechselpunkte in Echtzeit.

In der Regel ist es nicht möglich, das Werkstück auf der Werkstückhalterung exakt zu positionieren. Daher ist bevorzugt, dass die Steuereinrichtung Informationen über eine Istpositionierung des Werkstücks relativ zu einer das Werkstück tragenden Werkstückhalterung entgegen nimmt und die Sollachsbewegungen unter Berücksichtigung der Informationen über die Istpositionierung ermittelt. Die Informationen über die Istpositionierung des Werkstücks können hierbei Informationen über bis zu drei translatorische und bis zu drei rotatorische Positionierungen umfassen.

Vorzugsweise korrespondiert eine der Sollachsbewegungen mit einer Drehbewegung einer das Werkstück tragenden Werkstückhalterung um eine Halterungsachse. Dadurch vereinfacht sich der Betrieb der Produktionsmaschine erheblich.

In vielen Fällen weist die Produktionsmaschine sieben Achsen auf. In diesem Fall ist die Ermittlung der Sollachsbewegungen nicht eindeutig, da die Produktionsmaschine kinematisch überbestimmt ist. Vorzugsweise ist der Steuereinrichtung daher mindestens eine einzuhaltende Zusatzbedingung vorgegeben. Die Steuereinrichtung ermittelt die Sollachsbewegungen in diesem Fall derart, dass die Zusatzbedingung eingehalten wird.

Wenn die Produktionsmaschine sieben Achsen aufweist und eine der Sollachsbewegungen mit der Drehbewegung der Werkstückhalterung korrespondiert, korrespondieren die sechs anderen Sollachsbewegungen vorzugsweise mit drei translatorischen und drei rotatorischen Bewegungen des Maschinenkopfes im Raum. Hierbei kann alternativ eine direkte Beziehung der einzelnen Bewegungen des Maschinenkopfes mit je einer Sollachsbewegung gegeben sein (vergleiche die Darstellung in FIG 1) oder eine Kopplung über eine kinematische Transformation bestehen.

In einer bevorzugten Ausgestaltung der vorliegenden Erfindung bezieht sich die Zusatzbedingung auf die mit der Drehbewegung der Werkstückhalterung um die Halterungsachse korrespondierende Sollachsbewegung.

Es ist möglich, dass die Steuereinrichtung die Sollwechselpunkte in Werkstückkoordinaten ermittelt. Alternativ ist es möglich, dass die Steuereinrichtung die Sollwechselpunkte in Achskoordinaten ermittelt.

In vielen Fällen ist die Produktionsmaschine als Bandlegemaschine ausgebildet, der Maschinenkopf somit ein Bandlegekopf zum Aufbringen mindestens eines Bandes auf das Werkstück. Die Sollbearbeitungsinformation ist in diesem Fall eine Information darüber, an welchen Stellen des Werkstücks das mindestens eine Band auf das Werkstück aufgebracht werden soll.

In der Regel sind mittels des Bandlegekopfes simultan mehrere Bänder auf das Werkstück aufbringbar. In diesem Fall ermittelt die Steuereinrichtung vorzugsweise die Sollwechselpunkte individuell für jedes der Bänder.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch den Aufbau einer Bandlegemaschine,
- FIG 2: schematisch eine Steuereinrichtung für eine Bandlegemaschine,
- FIG 3 bis 8: Ablaufdiagramme und
- FIG 9: schematisch das simultane Aufbringen mehrerer Bänder auf ein Werkstück.

Die vorliegende Erfindung geht aus von einer Bandlegemaschine wie sie schematisch in FIG 1 dargestellt ist. Gemäß FIG 2 weist die Steuereinrichtung 3 einen Mikroprozessor 8, einen Arbeitsspeicher 9, eine Systemschnittstelle 10, eine Programmierschnittstelle 11, eine Maschinenschnittstelle 12 und eine Anwenderschnittstelle 13 auf. Die Elemente 8 bis 13 der Steuereinrichtung 3 sind über einen Steuerungsbus 14 miteinander verbunden.

Über die Systemschnittstelle 10 kann der Steuereinrichtung 3 ein Systemprogramm 15 zugeführt werden, das auf einem Datenträger 16 gespeichert ist. Der Datenträger 16 kann beispielsweise als Speicherbaustein ausgebildet sein, die Systemschnittstelle als Steckplatz für den Speicherbaustein. Es sind jedoch auch andere Ausgestaltungen möglich.

Über die Programmierschnittstelle 11 kann der Steuereinrichtung 3 das Anwenderprogramm 7 zugeführt werden. Das Anwenderprogramm 7 ist ebenfalls auf einem weiteren Datenträger 17 gespeichert, beispielsweise einem USB-Memorystick. Die Programmierschnittstelle 11 ist in diesem Fall als USB-Schnittstelle ausgebildet. Auch hier sind andere Ausgestaltungen möglich.

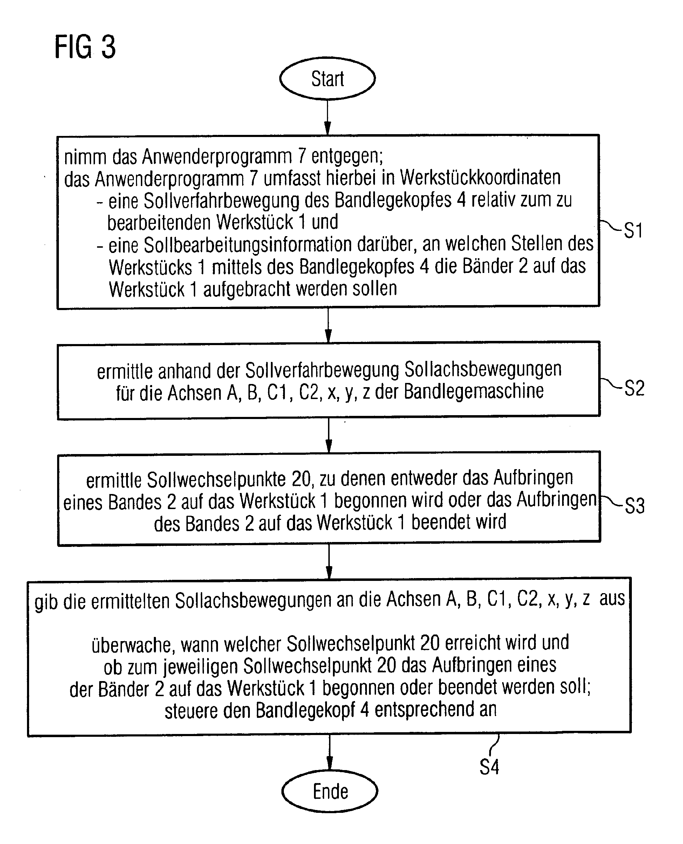

Das Systemprogramm 15 umfasst Maschinencode 18, der von der Steuereinrichtung 3 ausführbar ist. Die Ausführung des Systemprogramms 15 (bzw. des Maschinencodes 18) durch die Steuereinrichtung 3 bewirkt, dass die Steuereinrichtung 3 ein Steuerverfahren für die Bandlegemaschine ausführt, das nachfolgend in Verbindung mit FIG 3 näher erläutert wird.

Gemäß FIG 3 nimmt die Steuereinrichtung 3 zunächst in einem Schritt S1 das Anwenderprogramm 7 entgegen. Der Begriff "entgegen nehmen" bedeutet in diesem Zusammenhang nicht das rein mechanische Ankoppeln des weiteren Datenträgers 17 an die Steuereinrichtung 3, sondern das - vollständige oder stückweise - Übernehmen des Anwenderprogramms 7 zur unmittelbar nachfolgenden Ausführung des Anwenderprogramms 7.

Das Anwenderprogramm 7 umfasst zum einen eine Sollverfahrbewegung des Bandlegekopfes 4 relativ zum Werkstück 1, auf das die Bänder 2 aufgebracht werden sollen. Die Sollverfahrbewegung ist hierbei in Werkstückkoordinaten programmiert.

Weiterhin umfasst das Anwenderprogramm 7 eine Solllegeinformation darüber, an welchen Stellen des Werkstücks 1 mittels des Bandlegekopfes 4 die Bänder 2 auf das Werkstück 1 aufgebracht werden sollen. Auch die Solllegeinformation ist in Werkstückkoordinaten des Werkstücks 1 programmiert.

In einem Schritt S2 ermittelt die Steuereinrichtung 3 anhand der Sollverfahrbewegung für die Achsen A, B, C1, C2, x, y, z der Bandlegemaschine Sollachsbewegungen. Die Ermittlung der Sollachsbewegungen erfolgt hierbei derart miteinander koordiniert, dass der Bandlegekopf 4 unter Beachtung einzuhaltender Grundbedingungen in drei translatorischen und drei rotatorischen Freiheitsgraden entsprechend der Sollverfahrbewegung relativ zum Werkstück 1 bewegt wird.

Die Vorgehensweise des Schrittes S2 ist für fünfachsige Fräsmaschinen und dergleichen, bei denen drei translatorische und zwei rotatorische Freiheitsgrade eingestellt werden, allgemein bekannt. Die Vorgehensweise ist als solche ohne weiteres um den dritten rotatorischen Freiheitsgrad erweiterbar.

Die Grundbedingungen sind die Bedingungen, die obenstehend in Verbindung mit FIG 1 bereits erwähnt wurden: Der Bandlegekopf 4 soll am Werkstück 1 anliegen, am Anliegepunkt orthogonal zur Fläche stehen und so orientiert sein, dass das Aufbringen der Bänder 2 in der momentanen Bahnrichtung erfolgt.

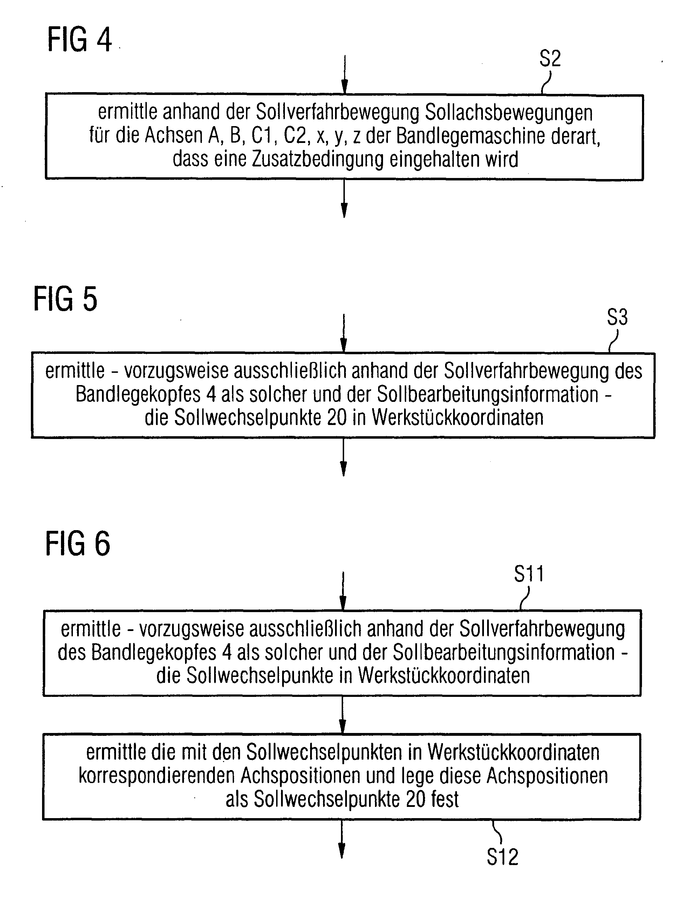

Wenn die Bandlegemaschine exakt sechs Achsen aufweist, ist die Ermittlung der Sollachsbewegungen durch die Sollverfahrbewegung eindeutig bestimmt. Im vorliegenden Fall weist die Bandlegemaschine jedoch sieben Achsen A, B, C1, C2, x, y, z auf (siehe die obigen Ausführungen zu FIG 1). In diesem Fall ist der Schritt S2 entsprechend FIG 4 ausgestaltet. Gemäß FIG 4 ermittelt die Steuereinrichtung 3 die Sollachsbewegungen derart, dass eine Zusatzbedingung eingehalten wird. Die Zusatzbedingung ist der Steuereinrichtung 3 - beispielsweise über das Anwenderprogramm 7, von einem Anwender 19 oder fest vorgegeben. Sie kann sich insbesondere auf die Hauptachse B beziehen. Insbesondere ist es möglich, dass die Hauptachse B explizit vorprogrammiert ist. Alternativ kann für die Hauptachse B ein vorbestimmter Dreh- oder Umfangsgeschwindigkeitsverlauf vorgegeben sein. Auch andere Ausgestaltungen sind jedoch möglich.

In einem Schritt S3 ermittelt die Steuereinrichtung 3 Sollwechselpunkte 20. Jeder Sollwechselpunkt 20 korrespondiert hierbei - vergleiche FIG 1 - mit einem Punkt, zu dem entweder das Aufbringen eines Bandes 2 auf das Werkstück 1 begonnen wird oder zu dem das Aufbringen des Bandes 2 auf das Werkstück 1 beendet wird.

Die Steuereinrichtung 3 ermittelt die Sollwechselpunkte 20 im Rahmen des Schrittes S3 zumindest anhand der Solllegeinformation des Anwenderprogramms 7. Hierbei ist es gemäß FIG 5 beispielsweise möglich, dass die Steuereinrichtung 3 die Sollwechselpunkte 20 in Werkstückkoordinaten ermittelt. In diesem Fall ist es möglich, dass die Steuereinrichtung 3 die Sollwechselpunkte 20 ausschließlich anhand der Sollverfahrbewegung des Bandlegekopfes 4 als solcher und der Solllegeinformation ermittelt. Alternativ ist es gemäß FIG 6 möglich, dass die Steuereinrichtung 3 die Sollwechselpunkte 20 in Achskoordinaten ermittelt. In diesem Fall ermittelt die Steuereinrichtung 3 gemäß FIG 6 zunächst in einem Schritt S11 Sollwechselpunkte in Werkstückkoordinaten. In einem Schritt S12 ermittelt die Steuereinrichtung 3 sodann die korrespondierenden Achspositionen und legt diese Achspositionen als Sollwechselpunkte 20 fest.

Gemäß FIG 3 wird als nächstes ein Schritt S4 ausgeführt. Im Schritt S4 gibt die Steuereinrichtung 3 die von ihr ermittelten Sollachsbewegungen an die Achsen A, B, C1, C2, x, y, z aus. Weiterhin überwacht sie, wann welcher Sollwechselpunkt 20 erreicht wird, ob zum jeweiligen Sollwechselpunkt 20 das Aufbringen eines der Bänder 2 auf das Werkstück 1 begonnen werden soll oder ob das Aufbringen des jeweiligen Bandes 2 auf das Werkstück 1 beendet werden soll, und steuert den Bandlegekopf 4 entsprechend an.

Durch die Ansteuerung des Schrittes S4 wird also erreicht, dass die Achsen A, B, C1, C2, x, y, z entsprechend den ermittelten Sollachsbewegungen angesteuert werden und der Bandlegekopf 4 die Bänder 2 entsprechend der Solllegeinformation auf das Werkstück 1 aufbringt.

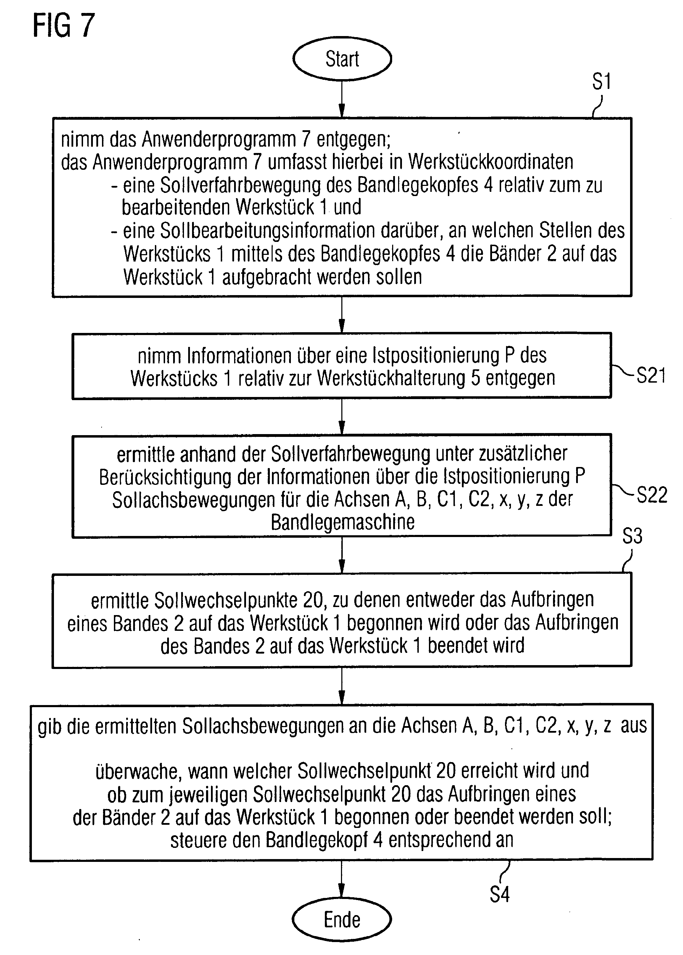

Das Steuerverfahren kann so ausgeführt werden, wie es obenstehend in Verbindung mit FIG 3 erläutert wurde. In manchen Fällen - insbesondere wenn das Werkstück 1 relativ groß ist - ist es jedoch nicht möglich, das Werkstück 1 mit hinreichender Genauigkeit in einer vorbestimmten Istpositionierung in der Werkstückhalterung 5 zu positionieren. In diesem Fall wird die Schrittfolge von FIG 2 gemäß FIG 7 modifiziert.

FIG 7 enthält die Schritte S1, S3 und S4 von FIG 2. Zusätzlich sind jedoch Schritte S21 und S22 vorhanden. Der Schritt S22 tritt hierbei an die Stelle des Schrittes S2 von FIG 2.

Im Schritt S21 nimmt die Steuereinrichtung 3 Informationen über eine Istpositionierung P des Werkstücks 1 relativ zur Werkstückhalterung 5 entgegen. Im Schritt S22 ermittelt die Steuereinrichtung 3 die Sollachsbewegungen im Prinzip analog zum Schritt S2 von FIG 3, jedoch unter Berücksichtigung der Informationen über die Istpositionierung P.

Der Schritt S21 kann beispielsweise eine manuelle Eingabe der Informationen durch den Anwender 19 umfassen (siehe auch FIG 2). Alternativ ist eine automatische Erfassung der Istpositionierung P möglich. Die Information über die Istpositionierung P kann beispielsweise die Information über einen Betrag und eine Phasenlage einer exzentrischen Anordnung des Werkstücks 1 bezüglich der Halterungsachse 6 sein.

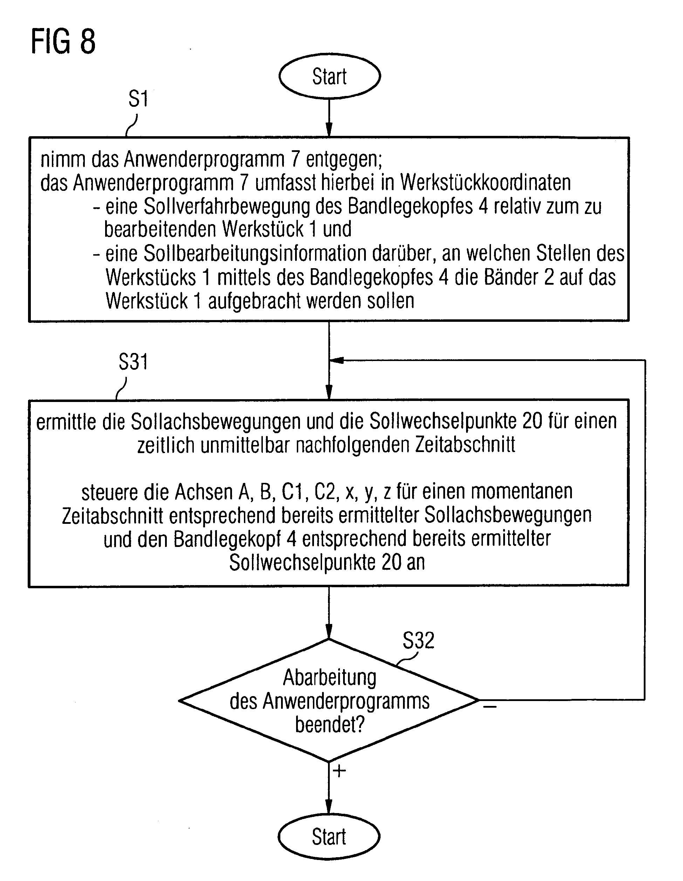

Bei den in Verbindung mit den FIG 3 bis 7 beschriebenen Vorgehensweisen werden die Sollachsbewegungen und die Sollwechselpunkte 20 zunächst vollständig ermittelt, also vor dem Ansteuern der Achsen A, B, C1, C2, x, y, z und dem Ansteuern des Bandlegekopfes 4. Alternativ ist es jedoch möglich, dass die Steuereinrichtung 3 die Sollachsbewegungen und die Sollwechselpunkte 20 in Echtzeit ermittelt. Hierzu wird beispielsweise gemäß FIG 8 die Vorgehensweise der FIG 3 derart modifiziert, dass die Schritte S2 bis S4 durch Schritte S31 und S32 ersetzt werden.

Im Schritt S31 ermittelt die Steuereinrichtung 3 die Sollachsbewegungen und die Sollwechselpunkte 20 für einen zeitlich unmittelbar nachfolgenden Zeitabschnitt. Weiterhin steuert sie die Achsen A, B, C1, C2, x, y, z für einen momentanen Zeitabschnitt entsprechend bereits ermittelter Sollachsbewegungen und den Bandlegekopf 4 entsprechend bereits ermittelter Sollwechselpunkte 20 an. Im Schritt S32 prüft die Steuereinrichtung 3, ob die Abarbeitung des Anwenderprogramms 7 bereits beendet ist. Wenn dies nicht der Fall ist, geht die Steuereinrichtung 3 zum Schritt S31 zurück.

Die Vorgehensweise von FIG 8 ist selbstverständlich auch bei der Vorgehensweise von FIG 7 analog anwendbar.

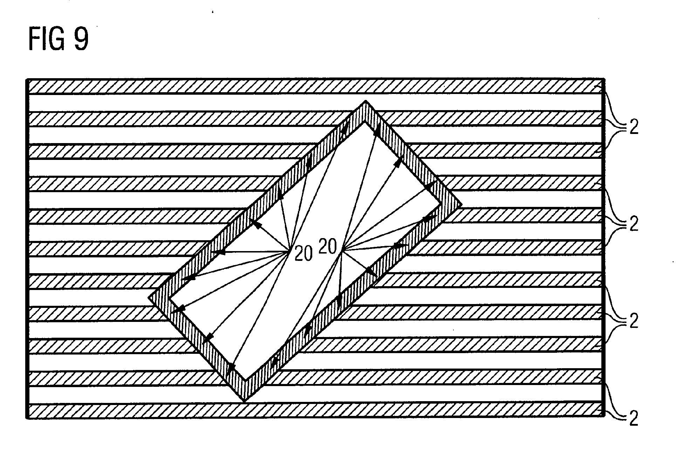

In der Regel sind mittels des Bandlegekopfes 4 simultan mehrere Bänder 2 auf das Werkstück 1 aufbringbar. Dies ist in FIG 1 für zwei Bänder 2 dargestellt, in FIG 9 für elf Bänder 2. Auch andere Anzahlen von Bändern 2 sind jedoch möglich, beispielsweise fünf, acht oder fünfzehn Bänder 2. Im Falle mehrerer Bänder 2 ermittelt die Steuereinrichtung 3 die Sollwechselpunkte 20 individuell für jedes der Bänder 2. Dies ist insbesondere aus FIG 9, im Ansatz jedoch bereits auch aus FIG 1 ersichtlich.

Die vorliegende Erfindung weist viele Vorteile auf. Insbesondere werden Linearisierungsfehler vermieden und die Programmlänge des Anwenderprogramms 7 deutlich reduziert. Weiterhin können Fehlstellungen des Werkstücks 1 durch einfache statische Transformationen im kartesischen Raum direkt online in der Steuereinrichtung 3 korrigiert werden. Zusätzliche Hardware für die Steuerung des Bandlegekopfes 4 ist nicht erforderlich. Auch ist die Synchronisation von Bandlegekopf 4 und Achsen A, B, C1, C2, x, y, z von selbst gegeben. Schließlich können dynamisch unerwünschte Geschwindigkeitsschwankungen der Hauptachse B - zumindest weitgehend - vermieden werden.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Steuerverfahren für eine Produktionsmaschine, wobei eine Steuereinrichtung (3) für die Produktionsmaschine unter Ausführung eines Systemprogramms (15)
- ein Anwenderprogramm (7) entgegen nimmt, das in Werkstückkoordinaten eines zu bearbeitenden Werkstücks (1) eine Sollverfahrbewegung eines Maschinenkopfes (4) der Produktionsmaschine relativ zum Werkstück (1) sowie eine Sollbearbeitungsinformation darüber, an welchen Stellen des Werkstücks (1) mittels des Maschinenkopfes (4) das Werkstück (1) bearbeitet werden soll, umfasst,
- anhand der Sollverfahrbewegung für mindestens sechs Achsen (A, B,C1,C2,x,y,z) der Produktionsmaschine derart koordinierte Sollachsbewegungen ermittelt, dass der Maschinenkopf (4) unter Beachtung einzuhaltender Grundbedingungen in drei translatorischen und drei rotatorischen Freiheitsgraden entsprechend der Sollverfahrbewegung relativ zum Werkstück (1) bewegt wird, und die Achsen (A,B,C1,C2,x,y,z) entsprechend den ermittelten Sollachsbewegungen ansteuert,
- anhand zumindest der Sollbearbeitungsinformation Sollwechselpunkte (20) ermittelt, zu denen das Bearbeiten des Werkstücks (1) begonnen oder beendet werden soll, und den Maschinenkopf (4) entsprechend der ermittelten Sollwechselpunkte (20) ansteuert, so dass der Maschinenkopf (4) das Werkstück (1) entsprechend der Sollbearbeitungsinformation bearbeitet.

2. Steuerverfahren nach Anspruch 1, **dadurch gekennzeichnet, dass** die Steuereinrichtung (3) die Sollachsbewegungen und die Sollwechselpunkte (20) in Echtzeit ermittelt.

3. Steuerverfahren nach Anspruch 1 oder 2, **dadurch gekennzeichnet, dass** die Steuereinrichtung (3) Informationen über eine Istpositionierung (P) des Werkstücks (1) relativ zu einer das Werkstück (1) tragenden Werkstückhalterung (5) entgegen nimmt und dass die Steuereinrichtung (3) die Sollachsbewegungen unter Berücksichtigung der Informationen über die Istpositionierung (P) ermittelt.

4. Steuerverfahren nach Anspruch 1, 2 oder 3, **dadurch gekennzeichnet, dass** eine der Sollachsbewegungen mit einer Drehbewegung einer das Werkstück (1) tragenden Werkstückhalterung (5) um eine Halterungsachse (6) korrespondiert.

5. Steuerverfahren nach einem der obigen Ansprüche, **dadurch gekennzeichnet, dass** die Produktionsmaschine sieben Achsen (A,B,C1,C2,x,y,z) aufweist, dass der Steuereinrichtung (3) eine einzuhaltende Zusatzbedingung vorgegeben ist und dass die Steuereinrichtung (3) die Sollachsbewegungen derart ermittelt, dass die Zusatzbedingung eingehalten wird.

6. Steuerverfahren nach Anspruch 4 und 5, **dadurch gekennzeichnet, dass** die sechs anderen Sollachsbewegungen (A,Cl,C2,x,y,z) mit drei translatorischen und drei rotatorischen Bewegungen des Maschinenkopfes (4) im Raum korrespondieren.

7. Steuerverfahren nach Anspruch 4 und 5 oder Anspruch 6, **dadurch gekennzeichnet, dass** die Zusatzbedingung sich auf die mit der Drehbewegung der Werkstückhalterung (5) um die Halterungsachse (6) korrespondierende Sollachsbewegung bezieht.

8. Steuerverfahren nach einem der Ansprüche 1 bis 7, **dadurch gekennzeichnet, dass** die Steuereinrichtung (3) die Sollwechselpunkte (20) in Werkstückkoordinaten ermittelt.

9. Steuerverfahren nach einem der Ansprüche 1 bis 7, **dadurch gekennzeichnet, dass** die Steuereinrichtung (3) die Sollwechselpunkte (20) in Achskoordinaten ermittelt.

10. Steuerverfahren nach einem der obigen Ansprüche, **dadurch gekennzeichnet, dass** die Produktionsmaschine als Bandlegemaschine ausgebildet ist, dass der Maschinenkopf (4) als Bandlegekopf (4) zum Aufbringen mindestens eines Bandes (2) auf das Werkstück (1) ausgebildet ist und dass die Sollbearbeitungsinformation eine Information darüber ist, an welchen Stellen des Werkstücks (1) das mindestens eine Band (2) auf das Werkstück (1) aufgebracht werden soll.

11. Steuerverfahren nach Anspruch 10, **dadurch gekennzeichnet, dass** mittels des Bandlegekopfes (4) simultan mehrere Bänder (2) auf das Werkstück (1) aufbringbar sind und dass die Steuereinrichtung (3) die Sollwechselpunkte (20) individuell für jedes der Bänder (2) ermittelt.

12. Systemprogramm, das Maschinencode (18) umfasst, dessen Ausführung durch eine Steuereinrichtung (3) für eine Produktionsmaschine bewirkt, dass die Steuereinrichtung (3)
- ein Anwenderprogramm (7) entgegen nimmt, das in Werkstückkoordinaten eines zu bearbeitenden Werkstücks (1) eine Sollverfahrbewegung eines Maschinenkopfes (4) der Produktionsmaschine relativ zum Werkstück (1) sowie eine Sollbearbeitungsinformation darüber, an welchen Stellen des Werkstücks (1) mittels des Maschinenkopfes (4) das Werkstück (1) bearbeitet werden soll, umfasst,
- anhand der Sollverfahrbewegung für mindestens sechs Achsen (A,B,C1,C2,x,y,z) der Produktionsmaschine derart koordinierte Sollachsbewegungen ermittelt, dass der Maschinenkopf (4) unter Beachtung einzuhaltender Grundbedingungen in drei translatorischen und drei rotatorischen Freiheitsgraden entsprechend der Sollverfahrbewegung relativ zum Werkstück (1) bewegt wird, und die Achsen (A,B,C1,C2,x,y,z) entsprechend den ermittelten Sollachsbewegungen ansteuert,
- anhand zumindest der Sollbearbeitungsinformation Sollwechselpunkte (20) ermittelt, zu denen das Bearbeiten des Werkstücks (1) begonnen oder beendet werden soll, und den Maschinenkopf (4) entsprechend der ermittelten Sollwechselpunkte (20) ansteuert, so dass der Maschinenkopf (4) das Werkstück (1) entsprechend der Sollbearbeitungsinformation bearbeitet.

13. Datenträger, auf dem ein Systemprogramm (15) nach Anspruch 12 gespeichert ist.

14. Steuereinrichtung für eine Produktionsmaschine, wobei die Steuereinrichtung einen Systemspeicher (16) aufweist, in dem ein Systemprogramm (15) nach Anspruch 12 gespeichert ist, wobei das Systemprogramm (15) von der Steuereinrichtung ausführbar ist.

15. Produktionsmaschine, die eine Steuereinrichtung (3), einen Maschinenkopf (4), mindestens sechs Achsen (A,B,C1,C2,x, y, z) und eine Werkstückhalterung (5) aufweist,
- wobei der Maschinenkopf (4) mittels der Achsen (A,B,C1,C2, x,y,z) relativ zur Werkstückhalterung (5) in drei translatorischen und drei rotatorischen Freiheitsgraden verfahrbar ist,
- wobei mittels des Maschinenkopfes (4) ein von der Werkstückhalterung (5) gehaltenes Werkstück (1) bearbeitbar ist,
- wobei der Maschinenkopf (4) und die Achsen (A,B,C1,C2,x,y, z) von der Steuereinrichtung (3) steuerbar sind und die Steuereinrichtung(3) gemäß Anspruch 14 ausgebildet ist.

16. Produktionsmaschine nach Anspruch 15, **dadurch gekennzeichnet, dass** sie als Bandlegemaschine ausgebildet ist und dass der Maschinenkopf (4) als Bandlegekopf (4) zum Aufbringen mindestens eine Bandes (2) auf das Werkstück (1) ausgebildet ist.
